# EUROPÄISCHE PATENTSCHRIFT

(11) **EP 3 787 924 B1**
(45) Veröffentlichungstag und Bekanntmachung des Hinweises auf die Patenterteilung: **08.11.2023**
(21) Anmeldenummer: 19727870.8
(22) Anmeldetag: 16.05.2019
(51) Int. Cl.: B60M 1/20

(54) **SEITENHALTERANORDNUNG UND OBERLEITUNGSANLAGE**
LATERAL SUPPORT SYSTEM AND OVERHEAD LINE SYSTEM
ENSEMBLE DE SUPPORTS LATÉRAUX ET INSTALLATION DE LIGNE AÉRIENNE

(30) Priorität: 05.07.2018 DE 102018211120
(43) Veröffentlichungstag der Anmeldung: 10.03.2021
(73) Patentinhaber: Siemens Mobility GmbH, 81739 München (DE)
(72) Erfinder: MADL, Peter, 90765 Fürth (DE); RÜHL, Martin, 91054 Erlangen (DE); TERFLOTH, Sebastian, 91080 Uttenreuth (DE)
(74) Vertreter: Siemens Patent Attorneys
(86) Internationale Anmeldenummer: PCT/EP2019/062591
(87) Internationale Veröffentlichungsnummer: WO 2020/007524

(56) Entgegenhaltungen:
- EP-A1- 2 985 173
- CN-U- 206 383 836
- DE-U1-202015 007 750
- FR-A- 571 281
- GB-A- 933 972

## Beschreibung

Die Erfindung betrifft eine Seitenhalteranordnung zur seitlichen Fixierung eines Fahrdrahtes einer Oberleitungsanlage, mit wenigstens einer Fahrdrahtklemme, die zur Befestigung am Fahrdraht ausgebildet ist, und mit wenigstens einem Seitenhalter, der an einem Ende mit der Fahrdrahtklemme verbunden ist und dessen anderes Ende zur beweglichen Verbindung mit einem Stützelement der Oberleitungsanlage ausgebildet ist.

Die Erfindung betrifft ferner eine Oberleitungsanlage mit wenigstens einem Stützelement, mit wenigstens einer Fahrleitung und mit wenigstens einer zwischen Stützelement und Fahrleitung angeordneten Seitenhalteranordnung, die wenigstens eine Fahrdrahtklemme und wenigstens einen Seitenhalter umfasst, wobei die Fahrdrahtklemme am Fahrdraht befestigt ist und der Seitenhalter an einem Ende mit der Fahrdrahtklemme und am anderen Ende mit dem Stützelement verbunden ist.

Derartige Seitenhalter sind aus dem Stand der Technik bekannt und beispielsweise in der CN 206 383 836 U, der FR 571 281 A, der GB 933 972 A, der DE 29721029 U1 oder der DE 3207238 A1 beschrieben.

Bekannte Oberleitungsanordnungen sind so ausgestaltet, dass ein Stromabnehmer eines elektrisch betriebenen Fahrzeuges die Fahrleitung der Oberleitungsanlage während der Fahrt beschleift und darüber mit Traktionsenergie versorgt wird. Die elektrisch betriebenen Fahrzeuge können beispielsweise Schienenfahrzeuge wie U-Bahnen, Straßenbahnen oder Fernbahnzüge sein oder aber auch elektrisch betriebene Busse oder LKW (eHighway) .

Der Seitenhalter und die Seitenhalteranordnung dienen dabei der seitlichen Fixierung des Fahrdrahtes der Oberleitungsanlage. Dabei ist der Seitenhalter beweglich mit dem Stützelement der Oberleitungsanlage verbunden, um einen Anhub des Fahrdrahtes nach oben während einer Befahrung durch das Fahrzeug zu gestatten.

Bei bekannten Oberleitungsanlagen wurde davon ausgegangen, dass der Stromabnehmer des Fahrzeugs mit seiner Schleifleiste den Fahrdraht lediglich an seiner Unterseite kontaktiert. Vor allem bei Schienenfahrzeugen musste lediglich von einer geringen Seitenlage des Fahrdrahtes auf der Schleifleiste ausgegangen werden, die konstruktiv sichergestellt wurde. Insbesondere bei nicht schienengebundenen Fahrzeugen, wie beispielsweise elektrisch betriebenen LKW (Highway) kann es aber zu deutlich größeren seitlichen Relativbewegungen der Fahrzeuge kommen. Dadurch kann der Fahrdraht den vorgesehenen Kontaktbereich auf der Schleifleiste des Stromabnehmers verlassen und sich in einen seitlichen Grenzbereich bewegen. In diesem Grenzbereich wird der Fahrdraht nicht mehr ausschließlich von unten, sondern aufgrund der Neigung des seitlichen Stromabnehmerbereichs auch von der Seite kontaktiert und beschliffen. Hierdurch kann es zu Gefahren kommen, wenn zum Beispiel der Stromabnehmer mit der Seitenhalteranordnung und/oder der Fahrdrahtklemme in Kontakt gerät.

Es ist daher die Aufgabe der vorliegenden Erfindung, eine Seitenhalteranordnung und eine Oberleitungsanlage der eingangs genannten Art bereitzustellen, die ein seitliches Kontaktieren des Fahrdrahtes ermöglicht.

Erfindungsgemäß wird die Aufgabe durch die Merkmale des unabhängigen Patentanspruchs 1 gelöst.

Weiterhin wird die Aufgabe durch die eingangs genannte Oberleitungsanlage erfindungsgemäß mit den Merkmalen des unabhängigen Patentanspruchs 5 gelöst.

Die erfindungsgemäße Lösung hat den Vorteil, dass sie einen Lichtraum oberhalb der Unterkante und seitlich des montierten Fahrdrahtes freilässt und dadurch ein Beschleifen des Fahrdrahtes von der Seite in ungefährlicher Weise zulässt.

Die erfindungsgemäße Lösung kann durch vorteilhafte Ausgestaltungen weiterentwickelt werden, die im Folgenden beschrieben sind.

So kann der Seitenhalter so ausgestaltet sein, dass ein Abstand zwischen den Enden des Seitenhalters einstellbar ausgebildet ist. Dies hat den Vorteil, dass die Montage der Oberleitungsanlage durch die Einstellbarkeit des Seitenhalters deutlich vereinfacht wird. Dadurch kann die seitliche Position des Fahrdrahtes auch nach Montage des Seitenhalters eingestellt werden. Bekannte Seitenhalter sind in ihrer Länge nicht veränderbar, so dass der Aufwand bei Änderungen relativ groß ist. Insbesondere kann der erfindungsgemäße Seitenhalter wenigstens zwei Seitenhalterelemente umfassen, die zueinander überlappend angeordnet sind. Dies können beispielsweise zwei ineinander gesteckte Rohre oder Profile sein, durch die der Abstand zwischen den Enden des Seitenhalters leicht einstellbar ist.

Um eine besonders stabile Anordnung des Fahrdrahtes zu gewährleisten, kann der stumpfe Winkel einen Wert zwischen 95 ° und 110 ° aufweisen. Dieser Winkelbereich hat sich als besonders günstig erwiesen.

Ferner kann sich die die Fahrdrahtklemme quer zur Fahrdrahtlängsrichtung maximal in einem Bereich von > 65 ° zur Horizontalen verbreitern. Dies hat den Vorteil, dass ein noch größerer Lichtraum seitlich vom Fahrdraht für ein seitliches Beschleifen freigelassen wird.

In einer vorteilhaften Ausgestaltung der erfindungsgemäßen Oberleitungsanlage kann die Seitenhalteranordnung nach einer der zuvor genannten vorteilhaften Ausgestaltungen ausgebildet sein.

Ferner können die den Lichtraum begrenzenden Geraden in einem Winkel von größer 65° zur Horizontalen verlaufen. Dies hat den Vorteil, dass ein noch größerer Lichtraum von der erfindungsgemäßen Oberleitungsanlage freigelassen wird, der ein seitliches Beschleifen des Fahrdrahtes noch stärker zulässt.

Im Folgenden wird die Erfindung mit Bezug auf die beigefügten Zeichnungen und die darin dargestellten beispielhaften Ausführungsformen beschrieben.

Es zeigen:
- Figur 1: ein seitliches Beschleifen eines Fahrdrahtes einer Oberleitungsanlage aus dem Stand der Technik durch einen Stromabnehmer;
- Figur 2: eine schematische Darstellung von einem freizulassenden Lichtraum der erfindungsgemäßen Oberleitungsanlage;
- Figur 3: eine schematische Darstellung einer beispielhaften Ausführungsform einer erfindungsgemäßen Oberleitungsanlage;
- Figur 4: eine schematische Darstellung einer beispielhaften Ausführungsform einer erfindungsgemäßen Seitenhalteranordnung der Oberleitungsanlage aus Figur 3;
- Figur 5: eine schematische Darstellung einer Seitenansicht der Seitenhalteranordnung aus Figur 4.

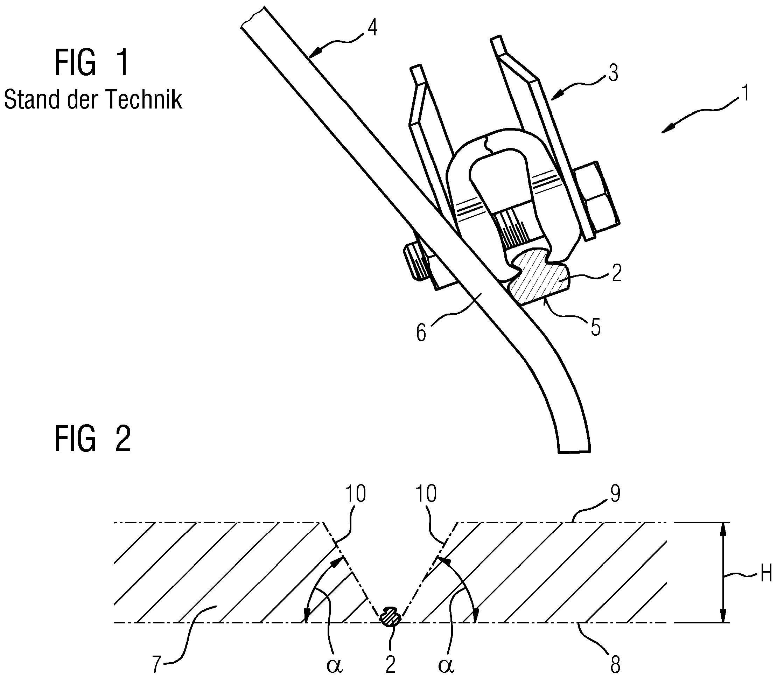

Figur 1 zeigt eine Oberleitungsanlage 1 gemäß dem Stand der Technik, die einen Fahrdraht 2 und eine am Fahrdraht 2 befestigte Fahrdrahtklemme 3 umfasst. Die Oberleitungsanlage 1 gemäß dem Stand der Technik ist dafür ausgelegt, dass der Fahrdraht 2 von einem Stromabnehmer 4 eines nicht weiter dargestellten Fahrzeugs ausschließlich an seiner Unterseite 5 kontaktiert wird. Wenn der Stromabnehmer 4 aber den Fahrdraht 2 mit dem in Figur 1 dargestellten seitlichen Bereich 6, der auch als Horn bezeichnet wird, kontaktiert, kann es zu einem sehr gefährlichen Kontakt mit der Fahrdrahtklemme 3 kommen. Hierdurch können große Schäden verursacht werden. Der seitliche Kontakt kann insbesondere bei nicht schienengebundenen Fahrzeugen, wie beispielsweise elektrisch betriebenen LKW (eHighway) vorkommen, deren Position unterhalb des Fahrdrahtes 2 weniger festgelegt ist als bei Schienenfahrzeugen. Der Fahrdraht 2 ist hier beispielhaft mit abgeschliffener flacher Unterseite 5 dargestellt.

Um die in Figur 1 dargestellte Situation zu vermeiden, ist in der erfindungsgemäßen Oberleitungsanlage ein in Figur 2 dargestellter freizuhaltender Lichtraum 7 ausgebildet, in dem sich der Stromabnehmer 4 eines Fahrzeugs ohne Gefahr bewegen kann.

Der Lichtraum 7 ist nach unten begrenzt durch eine erste Horizontale 8, die im Wesentlichen entlang der Unterkante des Fahrdrahtes 2 verläuft. Nach oben ist der Lichtraum 8 begrenzt durch eine weitere Horizontale 9, die einen Abstand H von der ersten Horizontalen 8 aufweist. Schließlich wird der Lichtraum 7 noch begrenzt durch Geraden 10, die schräg zu den Horizontalen 8, 9 und den Fahrdraht 2 seitlich berührend verlaufen und gegenüber der ersten Horizontalen 8 in einem Winkel α angeordnet sind. Der Winkel α beträgt vorzugsweise wenigstens 65 °, kann aber auch größer sein. Der Abstand H sollte erfindungsgemäß mindestens 120 mm betragen, kann aber auch größer sein.

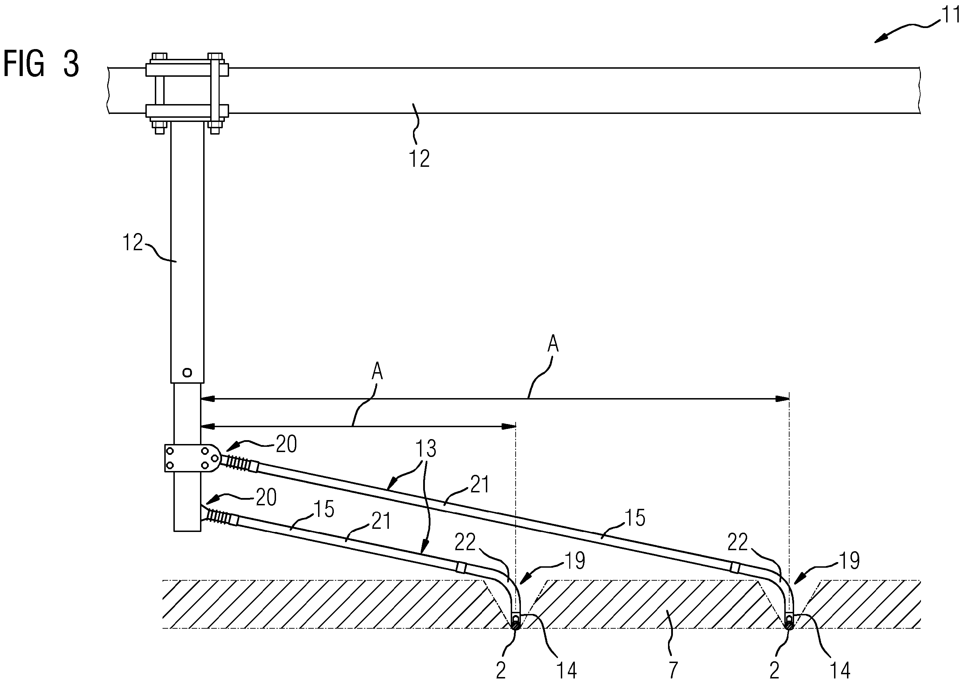

Im Folgenden wird eine beispielhafte Ausführungsform der erfindungsgemäßen Oberleitungsanlage 11 mit Bezug auf die Figuren 3 - 5 beschrieben.

Die erfindungsgemäße Oberleitungsanlage 11 in der beispielhaften Ausführungsform umfasst mehrere Stützelemente 12, zwei nebeneinander angeordnete Fahrdrähte 2 und mehrere erfindungsgemäße Seitenhalteranordnungen 13, die jeweils zwischen einem Stützelement 12 und einem Fahrdraht 2 angeordnet sind. Jede erfindungsgemäße Seitenhalteranordnung 13 weist eine Fahrdrahtklemme 14 und einen Seitenhalter 15 auf.

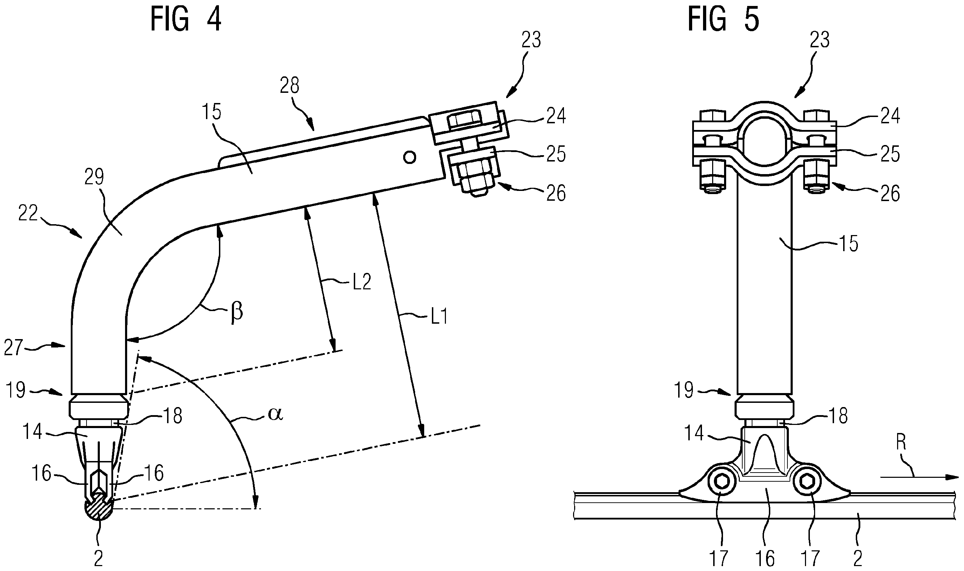

Die Fahrdrahtklemme 14 ist in an sich bekannter Weise zur Befestigung am Fahrdraht 2 ausgebildet. Dafür umfasst die Fahrdrahtklemme 15 zwei Klemmbacken 16, die formschlüssig in eine Rille des Fahrdrahts 2 eingreifen und über ein Schraubverbindungsmittel 17 gegeneinander verschraubt und dadurch mit dem Fahrdraht 2 verklemmt sind. Im Gegensatz zur Fahrdrahtklemme 3 in Figur 1 nach dem Stand der Technik ist die Fahrdrahtklemme 14 aber so ausgestaltet, dass die Klemmbacken 16 im montierten Zustand in den Figuren 4 und 5 quer zu einer Fahrdrahtlängsrichtung R im Wesentlichen nicht über die Breite des Fahrdrahts 2 überstehen. Dadurch ist gewährleistet, dass der Lichtraum 7 durch die Fahrdrahtklemme 14 nicht verletzt wird. Zwar vergrößert sich die Breite der Fahrdrahtklemme 14 quer zur Fahrdrahtlängsrichtung R in einer Richtung vom Fahrdraht 2 weg. Aber lediglich geringfügig, so dass ein Winkel α von größer 65 ° bei der Ausführungsform in Figur 4 gewährleistet ist. An dem, dem Fahrdraht 2 abgewandten Ende, weist die Fahrdrahtklemme 14 einen Kupplung 18 auf, mit der sie mit dem Seitenhalter 15 verbunden ist.

Um den gewünschten Winkel α zu erreichen, muss also ein Winkel (nicht dargestellt), mit dem sich die Fahrdrahtklemme (14) verbeitert, kleiner als der Winkel α sein.

Der Seitenhalter 15 ist an seinem einen Ende 19 mit der Fahrdrahtklemme 14 verbunden und an seinem anderen Ende 20 mit einem Stützelement 12. Der Seitenhalter 15 weist ein erstes Seitenhalterelement 21 und ein zweites Seitenhalterelement 22 auf, die miteinander verbunden und relativ zueinander verschiebbar ausgebildet sind. Dadurch ist ein Abstand A zwischen den Enden 19, 20 einstellbar. Dafür sind die Seitenhalterelement 21, 22 in der beispielhaften Ausführungsform in den Figuren 3 - 5 als Rohre ausgebildet, die sich in ihrem Durchmesser unterscheiden und dadurch ineinander steckbar und relativ zueinander verschiebbar sind. Beispielsweise weist das erste Seitenhalterelement 21 einen geringeren Durchmesser als das zweite Seitenhalterelement 22 auf, so dass das erste Seitenhalterelement 21 in das zweite Seitenhalterelement 22 im montierten Zustand in Figur 3 eingesteckt ist. Bei der beispielhaften Ausführungsform kann die Einstecktiefe beispielsweise in einem Bereich von etwa 5 - 10 cm variiert werden. Dadurch kann die endgültige Länge des Seitenhalters 15 bzw. der Abstand A um etwa 10 cm stufenlos variiert werden.

Zur Fixierung der beiden Seitenhalterelemente 21, 22 zueinander umfasst der Seitenhalter 15 in der hier dargestellten Ausführungsform ein Klemmelement 23. Das Klemmelement 23 umfasst eine am zweiten Seitenhalterelement 22 angeschweißte Lasche 24, eine gegenüberliegende bewegliche Lasche 25 und Schraubverbindungsmittel 26 zur Verbindung der Laschen 24, 25 miteinander. Wenn der gewünschte Abstand A des Seitenhalters 15 eingestellt ist, und das erste Seitenhalterelement 21 im zweiten Seitenhalterelement 22 steckt, werden die beiden Laschen 24, 25 mit Hilfe der Schraubverbindungsmittel 26 gegeneinander bewegt und verklemmen und fixieren die Seitenhalterelemente 21, 22 zueinander. Als Schraubverbindungsmittel 26 sind hier zum Beispiel Bolzen und Muttern verwendet.

Durch die ineinander gesteckten und durch das Klemmelement miteinander verbundenen Seitenhalterelemente 21, 22 ist eine stromfeste Verbindung sichergestellt, damit über den Seitenhalter 12 fließende Kurzschlussströme nicht zu einem mechanischen Versagen führen können.

Um im montierten Zustand den freizuhaltenden Lichtraum 7 nicht zu verletzen, ist der erfindungsgemäße Seitenhalter 15 mit einem auskragenden Abschnitt ausgeführt. Dazu ist das zweite Seitenhalterelement 22 gebogen ausgebildet, so dass ein erster Seitenhalterabschnitt 27 zu einem zweiten Seitenhalterabschnitt 28 in einem stumpfen Winkel β angeordnet ist. Der erste Seitenhalterabschnitt 27 verläuft dabei im Wesentlichen senkrecht zur Fahrleitungslängsrichtung R. Die beiden Seitenhalterabschnitte 27, 28 sind über einen Bogen 29 miteinander verbunden. Dadurch kragt der Seitenhalterabschnitt 27 mit der Fahrdrahtklemme 14 um eine Länge L1 aus bzw. steht um die Länge L1 vor gegenüber Seitenhalterabschnitt 28. So wird der Lichtraum 7 nicht verletzt. Der Seitenhalter 15 kragt durch den Seitenhalterabschnitt 27 um die Länge L2 aus. Die Länge L1 beträgt wenigstens 120 mm, vorzugsweise 150 mm, und die Länge L2 wenigstens 70 mm. Der Bogen 29 kann alternativ durch einen Winkel ersetzt werden.

Der Seitenhalter 15 ist am Ende 20 in bekannter Weise beweglich mit dem Stützelement 12 verbunden, um einen Anhub des Fahrdrahtes 2 zu ermöglichen.

Die Stützelemente 12 der Oberleitungsanlage 11 sind an sich aus dem Stand der Technik bekannt und als Masten oder Portale ausgebildet, die im Wesentlichen fest mit Bauwerken oder dem Grund verbunden sind, um das sogenannte Kettenwerk der Oberleitungsanlage zu halten. Die Stützelemente 12 umfassen dabei gegebenenfalls auch Ausleger und ähnliches, an denen das Kettenwerk (nicht dargestellt) und der Seitenhalter 15 befestigt werden. Bei der beispielhaften Ausführungsform in Figur 3 wird der Seitenhalter 15 mit seinem Ende 20 mit einem senkrecht angeordneten Stützelement 12 in bekannter Weise verbunden.

## Patentansprüche

1. Seitenhalteranordnung (13) zur seitlichen Fixierung eines Fahrdrahtes (2) einer Oberleitungsanlage (1),
mit wenigstens einer Fahrdrahtklemme (14), die zur Befestigung am Fahrdraht (2) ausgebildet ist, und
mit wenigstens einem Seitenhalter (15), der am einen Ende (19) mit der Fahrdrahtklemme (14) verbunden ist und dessen anderes Ende (20) zur beweglichen Verbindung mit einem Stützelement (12) der Oberleitungsanlage (1) ausgebildet ist, wobei der Seitenhalter (15) wenigstens zwei Seitenhalterabschnitte (27, 28) aufweist, die in einem stumpfen Winkel (β) zueinander angeordnet sind, wobei der eine Seitenhalterabschnitt (27) mit der Fahrdrahtklemme (14) verbunden ist und diese zusammen über den anderen Seitenhalterabschnitt (28) mit einer Länge (L1) von wenigstens 120 mm, vorzugsweise 150 mm, vorstehen,
**dadurch gekennzeichnet, dass**
sich die Fahrdrahtklemme (14) quer zur Fahrdrahtlängsrichtung (R) maximal in einem Bereich von größer 65° zu einer Horizontalen (8) verbreitert, wobei die Horizontale (8) entlang der Unterkante des Fahrdrahtes (2) verläuft, und der Bereich von größer 65° zu der Horizontalen (8) begrenzt ist durch schräg zur ersten Horizontalen (8), den Fahrdraht (2) seitlich berührend verlaufende Geraden (10).

2. Seitenhalteranordnung (13) nach Anspruch 1,
**dadurch gekennzeichnet, dass**
der Seitenhalter (15) so ausgestaltet ist, dass ein Abstand (A) zwischen den Enden (19, 20) des Seitenhalters einstellbar ausgebildet ist.

3. Seitenhalteranordnung (13) nach Anspruch 2,
**dadurch gekennzeichnet, dass**
der Seitenhalter (15) wenigstens zwei Seitenhalterelemente (21, 22) umfasst, die zueinander überlappend angeordnet sind.

4. Seitenhalteranordnung (13) nach einem der oben genannten Ansprüche,
**dadurch gekennzeichnet, dass**
der stumpfe Winkel (β) einen Wert zwischen 95° und 110° aufweist.

5. Oberleitungsanlage (1)
mit wenigstens einem Stützelement (12),
mit wenigstens einem Fahrdraht (2) und
mit wenigstens einer zwischen Stützelement (12) und Fahrdraht (2) angeordneten Seitenhalteranordnung (13), die wenigstens eine Fahrdrahtklemme (14) und wenigstens einen Seitenhalter (15) umfasst,
wobei die Fahrdrahtklemme (14) am Fahrdraht (2) befestigt ist und
der Seitenhalter (15) am einen Ende (19) mit der Fahrdrahtklemme (14) und am anderen Ende (20) mit dem Stützelement (12) verbunden ist,
wobei die Oberleitungsanlage (1) so ausgebildet ist, dass ein freizulassender Lichtraum (7) im Wesentlichen freigelassen ist,
wobei der Lichtraum (7) begrenzt ist durch eine erste Horizontale (8) durch die Unterkante des Fahrdrahts (2) und eine zweite Horizontale (9) mit einem Abstand (H) von mindestens 120 mm zur ersten Horizontalen (8),
**dadurch gekennzeichnet, dass**
der Lichtraum (7) begrenzt ist durch schräg zur ersten Horizontalen (8) mit einem Winkel (α) von wenigstens 65° und den Fahrdraht (2) seitlich berührend verlaufende Geraden (10).

6. Oberleitungsanlage (1) nach Anspruch 5,
**dadurch gekennzeichnet, dass**
die Seitenhalteranordnung (13) nach einem der oben genannten Ansprüche 1 bis 4 ausgebildet ist.

## Claims

1. Lateral support system (13) for laterally fixing a contact wire (2) of an overhead line system (1),
having at least one contact wire terminal (14), which is embodied to be fastened to the contact wire (2), and
having at least one lateral support (15), which is connected at one end (19) to the contact wire terminal (14), and the other end (20) of which is embodied for movable connection to a supporting element (12) of the overhead line system (1), wherein the lateral support (15) has at least two lateral support segments (27, 28), which are arranged at an obtuse angle (β) with respect to one another, wherein the one lateral support segment (27) is connected to the contact wire terminal (14) and together these protrude beyond the other lateral support segment (28) with a length (L1) of at least 120mm, preferably 150 mm,
**characterised in that**
the contact wire terminal (14) widens at a right angle to the contact wire longitudinal direction (R) at most in a range of greater than 65° with respect to a horizontal (8), wherein the horizontal (8) runs along the lower edge of the contact wire (2) and the region of greater than 65° is restricted with respect to the horizontal (8) by straight lines (10) which run obliquely to the first horizontal (8) and laterally touch the contact wire (2).

2. Lateral support system (13) according to claim 1,
**characterised in that**
the lateral support (15) is designed so that a spacing (A) between the ends (19, 20) of the lateral support is embodied to be adjustable.

3. Lateral support system (13) according to claim 2,
**characterised in that**
the lateral support (15) comprises at least two lateral support elements (21, 22), which are arranged so as to overlap with respect to one another.

4. Lateral support system (13) according to one of the afore-cited claims,
**characterised in that**
the obtuse angle (β) has a value of between 95° and 110°.

5. Overhead line system (1)
having at least one support element (12),
having at least one contact wire (2) and
having at least one lateral support system (13) which comprises at least one contact wire terminal (14) and at least one lateral support (15) and is arranged between support element (12) and contact wire (2),
wherein the contact wire terminal (14) is fastened to the contact wire (2) and
the lateral holder (15) is connected at one end (19) to the contact wire terminal (14) and at the other end (20) to the support element (12),
wherein the overhead line system (1) is embodied so that a clearance (7) to be released is essentially released,
wherein the clearance (7) is restricted by a first horizontal (8) by the lower edge of the contact wire (2) and a second horizontal (9) with a spacing (H) of at least 120 mm with respect to the first horizontal (8),
**characterised in that**
the clearance (7) is restricted by straight lines (10) which run obliquely to the first horizontal (8) at an angle (α) of at least 65° and laterally touch the contact wire (2).

6. Overhead line system (1) according to claim 5,
**characterised in that**
the lateral support system (13) is embodied according to one of the afore-cited claims 1 to 4.

## Revendications

1. Ensemble (13) formant support latéral pour la fixation latérale d'un caténaire (2) d'une installation (1) de ligne aérienne, comportant au moins une pince (14) de caténaire, qui est conçue pour la fixation au caténaire (2), et
comportant au moins un support (15) latéral, qui à une extrémité (19) est reliée à la pince (14) de caténaire et dont l'autre extrémité (20) est conçue pour être reliée de manière mobile à un élément (12) de support de l'installation (1) de ligne aérienne, le support (15) latéral ayant au moins deux sections (27, 28) de support latéral qui sont disposées selon un angle obtus (β) l'une par rapport à l'autre, l'une (27) des sections de support latéral étant reliée à la pince (14) de caténaire et celles-ci dépassant ensemble de l'autre section de support latéral (28) avec une longueur (Ll) d'au moins 120 mm, de préférence de 150 mm,
**caractérisé en ce que**
la pince (14) de caténaire s'élargit transversalement à la direction (R) longitudinale du caténaire au maximum dans une zone de plus de 65° par rapport à une horizontale (8), l'horizontale (8) s'étendant le long du bord inférieur du caténaire (2), et la zone de plus de 65° par rapport à l'horizontale (8) étant limitée par des droites (10) inclinées par rapport à la première horizontale (8), en touchant latéralement le caténaire (2).

2. Ensemble (13) formant support latéral selon la revendication 1, **caractérisé en ce que**
le support (15) latéral est configuré de telle sorte qu'une distance (A) entre les extrémités (19, 20) du support latéral est réalisée de manière à pouvoir être réglée.

3. Ensemble (13) de support latéral selon la revendication 2,
**caractérisé en ce que**
le support (15) latéral comprend au moins deux éléments (21, 22) de support latéral qui sont disposés de manière à se chevaucher l'un l'autre.

4. Ensemble (13) de support latéral selon l'une des revendications précédentes,
**caractérisé en ce que**
l'angle obtus (β) a une valeur comprise entre 95° et 110°.

5. Installation (1) de ligne aérienne comportant au moins un élément (12) de support,
au moins un caténaire (2) et
au moins un ensemble (13) de support latéral, disposé entre l'élément (12) de support et le caténaire (2), qui comprend au moins une pince (14) de caténaire et au moins un support (15) latéral,
dans lequel la pince (14) de caténaire est fixée au caténaire (2) et
le support latéral (15) est relié à une extrémité (19) à la pince (14) de caténaire et à l'autre extrémité (20) à l'élément (12) de support,
dans lequel l'installation de ligne aérienne (1) est conçue de telle sorte qu'un espace libre (7) à laisser libre est essentiellement laissé libre,
l'espace libre (7) étant délimité par une première horizontale (8) passant par le bord inférieur du caténaire (2) et une deuxième horizontale (9) à une distance (H) d'au moins 120 mm de la première horizontale (8), **caractérisé en ce que**
l'espace libre (7) est délimité par des droites (10) s'étendant inclinées par rapport à la première horizontale (8) d'un angle (α) d'au moins 65° et touchant latéralement le caténaire (2).

6. Installation (1) de ligne aérienne selon la revendication 5,
**caractérisée en ce que** l'ensemble (13) formant support latéral est réalisé selon l'une quelconque des revendications 1 à 4.
